(19) Europäisches Patentamt
European Patent Office
Office européen des brevets

(11) EP 0 724 903 B1

(12) # FASCICULE DE BREVET EUROPEEN

(45) Date de publication et mention de la délivrance du brevet:
**09.04.2003 Bulletin 2003/15**

(51) Int Cl.[7]: **B01D 53/94**, B01J 37/02

(21) Numéro de dépôt: **96400168.9**

(22) Date de dépôt: **24.01.1996**

(54) **Catalyseurs de réduction des oxydes d'azote dans un milieu oxydant et son utilisation**

Katalysator zur Reduktion von Stickstoffoxiden in oxidierender Atmosphäre und dessen Verwendung

Catalyst for the reduction of nitrogen oxides in an oxidising atmosphere and its use

(84) Etats contractants désignés:
**DE ES GB IT**

(30) Priorité: **03.02.1995 FR 9501364**

(43) Date de publication de la demande:
**07.08.1996 Bulletin 1996/32**

(73) Titulaire: **INSTITUT FRANCAIS DU PETROLE
92502 Rueil-Malmaison (FR)**

(72) Inventeurs:
- **Durand, Daniel
F-92500 Rueil Malmaison (FR)**
- **Mabilon, Gil
F-78420 Carrières sur Seine (FR)**
- **Mouchot, Paul
F-69002 Lyon (FR)**

(56) Documents cités:

| | |
|---|---|
| **EP-A- 0 100 267** | **EP-A- 0 130 835** |
| **EP-A- 0 225 595** | **EP-A- 0 321 949** |
| **EP-A- 0 441 173** | **EP-A- 0 507 590** |
| **EP-A- 0 613 714** | **DE-A- 2 440 433** |
| **DE-C- 3 830 319** | **FR-A- 2 449 475** |
| **US-A- 3 883 444** | **US-A- 3 931 050** |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

EP 0 724 903 B1

## Description

La présente invention concerne des catalyseurs qui favorisent l'élimination des oxydes d'azote (NO et $NO_2$ couramment appelés $NO_x$) présents dans un mélange gazeux surstoechiométrique en composés oxydants, et plus particulièrement en oxygène. Ces catalyseurs activent la réaction de réduction de ces oxydes en azote moléculaire ($N_2$), en limitant la formation de sous-produits indésirés tel que le protoxyde d'azote ($N_2O$).

Ces catalyseurs sont particulièrement adaptés à la conversion des oxydes d'azote présents dans les gaz d'échappement de moteurs stationnaires ou de moteurs automobiles Diesel ou à allumage commandé (moteurs dits à réglage pauvre), mais également dans les gaz issus de turbine à gaz fonctionnant avec des carburants gazeux ou liquides.

Ces gaz se caractérisent par des teneurs en oxydes d'azote de quelques dizaines à quelques milliers de parties par million (ppm), par des teneurs comparables en composés réducteurs (CO, $H_2$, hydrocarbures) mais surtout par des concentrations importantes en oxygène (de 1 à près de 20% volume).

La forte toxicité des oxydes d'azote, leur rôle dans la formation des pluies acides et de l'ozone troposphérique ont conduit à la mise en place de normes sévères limitant les rejets de ces composés. Pour satisfaire ces normes il est généralement nécessaire d'éliminer au moins une partie de ces oxydes présents dans les gaz d'échappement des moteurs automobiles ou stationnaires et des turbines.

L'élimination des oxydes d'azote par décomposition thermique ou de préférence catalytique est envisageable mais les hautes températures exigées par cette réaction sont incompatibles avec celles des gaz d'échappement. Seule leur réduction est réalisable en utilisant les réducteurs présents, mais en faible quantités, dans le gaz d'échappement (CO, $H_2$, hydrocarbures imbrûlés ou dont la combustion a été imparfaite dans le moteur), et également en injectant, en amont du catalyseur, un complément de composés réducteurs. Ces agents de réduction sont des hydrocarbures, des alcools, des éthers ou autres composés oxygénés; ils peuvent être également le carburant liquide ou gazeux (sous pression "GNC" ou liquéfié "GPL") alimentant le moteur ou la turbine.

La réduction du mono et du dioxyde d'azote (NO et $NO_2$) peut conduire, selon les équations mentionnées ci-dessous, à la formation soit d'azote moléculaire ($N_2$), soit de protoxyde d'azote (N2O).

$$\left.\begin{matrix} 2\,NO \\ 2\,NO_2 \end{matrix}\right\} + \text{Réducteur} \xrightarrow{(O_2)} N_2 + (CO_2, H_2O)$$

$$\left.\begin{matrix} 2\,NO \\ 2\,NO_2 \end{matrix}\right\} + \text{Réducteur} \xrightarrow{(O_2)} N_2O + (CO_2, H_2O)$$

L'azote moléculaire ($N_2$) est le produit inoffensif désiré alors que la formation du protoxyde d'azote ($N_2O$), composé non inerte, doit être évitée ou au moins limitée au maximum.

Les paramètres essentiels pour caractériser les performances du catalyseur en élimination des oxyde d'azote sont:

- la température pour laquelle la réaction est maximum
- la conversion (ou taux d'élimination) des $NO_x$
- les sélectivités $N_2$ et $N_2O$
- et surtout le rendement $N_2$ de la réaction de réduction des $NO_x$ qui peut s'exprimer par la relation:

$$\text{Rendement } N_2 = 100 \times \frac{NO_x \text{ disparu} - 2 \times (N_2O \text{ formé})}{NO_x \text{ initial}}$$

Les phases catalytiques revendiquées par la demanderesse réalisent la réduction des oxydes d'azote avec

des taux de conversion élevés à des températures très inférieures à celle requises avec des catalyseurs conventionnels préparés par échange de métaux de transition, en particulier le cuivre, sur des zéolites. Elles conduisent également à des rendements en azote améliorés par rapport à ceux obtenus avec des catalyseurs préparés à base de métaux précieux déposés sur des supports classiques (alumine, silice, etc.).

La majorité des travaux sur la mise au point de catalyseurs actifs dans l'élimination des oxydes d'azote en milieu oxydant porte sur la mise en oeuvre de métaux de transition (et plus particulièrement le cuivre) échangés sur des zéolites de rapports atomiques Si/Al généralement compris entre 3 et 100 et dont les structures peuvent être de types différents (mordénite, faujasite, ZSM5, etc.). Ces catalyseurs sont actifs en conversion des oxydes d'azote pour des températures comprises entre 350 et 550°C. Ces conditions limitent donc leur utilisation à la dépollution des gaz d'échappement des moteurs à essence à réglage pauvre et des moteurs Diesel poids lourds lorsque ceux-ci fonctionnent à pleine charge et à haut régime. La réduction des oxydes d'azote sur ces catalyseurs est très sélective en azote moléculaire (FR-A-2655565 et US-A- 5 149 511). Malheureusement, pour les voitures Diesel légères, la température des gaz d'échappement est généralement comprise entre 150 et 300°C et dépasse rarement les 500°C, ce qui a pour conséquence une efficacité restreinte de ces catalyseurs en élimination des oxydes d'azote en condition normale d'utilisation du véhicule.

L'utilisation de métaux précieux comme phases actives permet également d'éliminer une majeure partie des oxydes d'azote (NO principalement) dans des proportions comparables à celles mesurées avec les catalyseurs au cuivre. Ces catalyseurs présentent, en outre, l'avantage d'être actifs à des températures nettement plus basses (200-300°C), ce qui est un avantage primordial pour la dépollution des gaz d'échappement des voitures Diesel dont les températures en sortie de moteur sont généralement comprises entre 150 et 300°C.

Les métaux précieux de la famille du platine peuvent être imprégnés sur différents supports tels que l'alumine, la silice, la zircone, l'oxyde de titane ou des zéolites ou encore des perovskites (EP-A-455491). Ils peuvent également être introduits dans un oxyde composite (perovskites par exemple). soit par imprégnation sur ce support soit par addition avec les autres matériaux qui servent à bâtir cet oxyde mixte (EP-A-525677).

Cependant, la majorité de ces catalyseurs présentent le handicap de ne réaliser que partiellement la réduction des $NO_x$ à savoir que le produit majoritairement formé n'est pas l'azote moléculaire ($N_2$) mais le protoxyde d'azote ($N_2O$).

D'autres catalyseurs renfermant des métaux précieux (généralement le platine, le palladium et le rhodium ou leurs mélanges), des alcalino-terreux, et des terres rares ont été préconisés pour dépolluer les gaz d'échappement de moteur à combustion interne, dont les oxydes d'azote. En général, ils sont mis en oeuvre dans le cadre de catalyse trois voies c'est à dire avec des compositions de gaz à la stoechiométrie ou proche de cet équilibre (JP-A-05/237384A - EP-A-507590 - EP-A-199509). Dans ces catalyseurs, l'ajout de ces éléments alcalino-terreux et de ces terres rares a pour objectif d'améliorer la stabilité thermique du catalyseur et d'accroître sa durée de vie. Cependant le cérium, de par sa faculté d'évoluer rapidement entre ses deux degrés d'oxydation (+3 et +4) selon la composition riche ou pauvre du mélange réactionnel, participe à l'acte catalytique (stockage et restitution de l'oxygène).

Dans le brevet US-A-4 849 398 il est décrit un catalyseur permettant d'élargir la fenêtre de fonctionnement et d'améliorer l'effet de stockage de l'oxygène, lorsque le gaz d'échappement devient oxydant. Ce catalyseur est préparé par formation d'une pérovskite (de type $Ba_{1-x}La_xCeO_3$, avec x de 0 à 1) sur un support enduit d'alumine, puis par imprégnation de l'ensemble par des métaux précieux.

Pour la conversion des $NO_x$ en milieu oxydant, un catalyseur platine - lanthane déposés sur un support poreux permet d'éliminer les polluants, dont les $NO_x$ dans un gaz d'échappement renfermant un excès d'oxygène (JP-A-05/168862). Le document EP-A-562516 décrit un catalyseur au platine imprégné sur un support alumine contenant du lanthane et du baryum partiellement combinés pour former un oxyde composite .

Dans le document JP-A-05/076762, il est décrit un catalyseur renfermant des métaux précieux, des métaux alcalins, des métaux de transition et des terres rares, où tous ces éléments entrent dans la structure d'une pérovskite.

Des systèmes catalytiques plus complexes sont également proposés. Par exemple, ils peuvent être formés par un ensemble de deux catalyseurs de formulations différentes et montés en série: le premier catalyseur à base de métaux précieux réaliserait l'oxydation de NO en $NO_2$ et le deuxième catalyeur à base de métaux de transition sur zéolite ou de rhodium réduirait ce dioxyde d'azote en azote moléculaire (JP-A-05/096132). Une autre solution proposée est de réaliser un catalyseur multicouches ou les métaux précieux, les terres rares, les métaux de transition et les métaux alcalino-terreux sont présents mais inégalement répartis sur chaque couche (JP-A-04/083516).

Le document EP-A-130 835 décrit un catalyseur comprenant un support et un constituant catalytiquement actif. Le support est un oxyde composite d'aluminium et d'au moins un métal choisi parmi le lanthane, le néodyme et le praséodyme. L'oxyde a une surface spécifique d'au moins 10 $m^2/g$ et consiste essentiellement en un mélange de La-β-alumine et de son précurseur, convertible en La-β-alumine lorsqu'il est chauffé à une température au-dessus de 1000 °C pendant 2 heures. De manière préférée, le composé d'oxyde contient de 1 à 20 % mole d'oxyde de lanthane, de néodyme ou de praséodyme, le complément étant de l'alumine. Le support a une structure en nid d'abeilles.

Le document DE-C-3 830 319 décrit un support de catalyseur utilisé pour la purification des gaz d'échappement des moteurs à combustion, consistant en une alumine classique, qui contient de 0,1 à 40% en poids de ZnO, apporté par imprégnation du support avec un sel de zinc, ainsi qu'un sel de cérium et éventuellement d'un sel de zirconium, ou par imprégnation d'un support contenant du $CeO_2$ et éventuellement du $ZrO_2$ avec un composé de zinc dissous ou dispersé, ou encore par imprégnation du catalyseur fini contenant un métal noble avec un composé de zinc dissous et, dans chaque cas, par séchage et activation du support entre 150 et 650 °C. Le support est de préférence modifié par 0,5 à 20 % en poids de $Fe_2O_3$, BaO, CaO, $La_2O_3$ et/ou des oxydes de terres rares.

Le document EP-A-321 949 décrit un support de catalyseur comprenant un ensemble de particules de micro-cristallites stables, de porosité élevée et co-précipitées, composé d'un mélange intime d'alumine et d'un oxyde de lanthanide. La quantité d'alumine est de 1 à 75 % en poids de la teneur en solides du support. Le lanthanide est de préférence le cérium, ou encore le lanthane, le néodyme ou le praséodyme, sous forme de micro-cristallites d'oxyde ayant un diamètre inférieur à 75 Å. La teneur en oxydes de lanthanides est de 1 à 45 % en poids, par rapport à l'alumine. Plus particulièrement, le support comprend un mélange d'alumine et de $CeO_2$ Un catalyseur actif peut être déposé sur le support. Le support peut contenir un matériau filmogène, en particulier de 2 à 40 % en poids d'un lanthanide colloïdal, notamment de cérine. Le matériau support du catalyseur peut être utilisé en revêtement sur un support.

L'objet de la présente invention est de proposer des catalyseurs d'efficacités comparables, sinon supérieures à celles des formulations ci-dessus, pour l'élimination des oxydes d'azote à basse température dans un mélange gazeux fortement oxydant, mais qui, en plus, permettent d'atteindre des rendements nettement améliorés en azote moléculaire. Cette amélioration est obtenue par une baisse de la sélectivité de la réduction des oxydes d'azote en protoxyde d'azote ($N_2O$) et par conséquent par un accroissement de la sélectivité et du rendement $N_2$.

La présente invention concerne un catalyseur capable d'éliminer les oxydes d'azote ($NO_x$) présents dans un mélange gazeux surstoechiométrique en oxygène en limitant au maximum la formation non désirée du protoxyde d'azote ($N_2O$). Pour réaliser cette réaction, à basse température et avec un rendement élevé en azote moléculaire ($N_2$), la demanderesse propose de modifier partiellement l'état de surface d'au moins un oxyde réfractaire conventionnel, dont l'alumine, par ajout d'au moins une terre rare pour former en surface au moins un aluminate de terre rare. A cette alumine modifiée, elle ajoute au moins un métal de transition et éventuellement un élément appartenant au groupe des alcalino-terreux et éventuellement un élément appartenant au groupe des terres rares. Au moins un élément appartenant au groupe des métaux précieux de la famille du platine est introduit dans la phase finale de préparation.

Ces phases catalytiques (ou phases actives) se présentent sous la forme, soit de billes, d'extrudés ou de pastilles, soit de supports monolithiques (appelés substrats) sur lesquels est enduite ou directement préparée la phase active (ou phase catalytique).

Ainsi, les catalyseurs de l'invention peuvent être définis, d'une manière générale, par le fait qu'ils comprennent, exprimé en pourcent masse par rapport au produit calciné à 1000 °C pendant 4 heures :

- de 30 à 98,45 % d'au moins un oxyde inorganique réfractaire constitué au moins en partie d'alumine ; la surface de l'alumine étant modifiée par ajout d'au moins un élément (A) appartenant au groupe des terres rares pour former une micro-couche d'aluminate de terre rare avec une partie de l'alumine ;

sur lequel sont dispersés :

- au moins un élément (A) appartenant au groupe des terres rares ;
- de 0,5 à 20 % d'au moins un élément (B) appartenant aux groupes VIB, VIIB, VIII et IB des métaux de transition, exprimé sous forme d'oxyde,
- et de 0 à 15 % d'au moins un élément (D) appartenant au groupe IIA des alcalino-terreux, exprimé sous forme d'oxyde ;

sur lesquels est dispersé :

- de 0,05 à 5 % d'au moins un élément (C) appartenant au groupe des métaux précieux comprenant le platine, le rhodium, le ruthénium, l'iridium et l'osmium ; et
- la teneur massique totale en les éléments appartenant au groupe des terres rares (A) étant comprise entre 1 et 30 %, exprimé sous forme d'oxyde ;
- ledit oxyde inorganique réfractaire comprenant au moins 50 % d'alumine ;
- le rapport atomique entre d'une part, la somme des atomes de (A) et, le cas échéant, de (D) et d'autre part, le nombre d'atomes de (B) étant compris entre 0,1 et 10 ; et
- ledit catalyseur ne contenant pas d'oxyde composite de type pérovskite détectable par diffraction des rayons X.

De manière avantageuse, dans le catalyseur de l'invention,

- ledit oxyde inorganique réfractaire représente de 52 à 93,9 % de sa masse;
- ledit d'au moins élément (B), exprimé sous forme d'oxyde, représente de 1 à 15 % en masse ;
- ledit élément (D), exprimé sous forme d'oxyde, représente de 0 à 10 % en masse;
- ledit élément (C) représente de 0,1 à 3 % en masse ;
- la teneur massique totale en les éléments appartenant au groupe des terres rares (A) est de 5 à 20 %, exprimé sous forme d'oxyde ; et
- ledit oxyde inorganique réfractaire comprend au moins 80 % d'alumine.

L'oxyde inorganique réfractaire est généralement choisi dans le groupe formé par les composés ci-après: l'alumine alpha, l'alumine béta, l'alumine delta, l'alumine gamma, l'alumine khi, l'alumine thêta. D'autres oxydes tels que, les silices, les silice-alumines, les zéolites, l'oxyde de titane, l'oxyde de zirconium et leurs combinaisons, des oxydes mixtes ou des solutions solides comprenant au moins deux des oxydes précités peuvent être ajoutés à ces alumines.

Cependant, la demanderesse privilégie les alumines béta, delta, gamma, thêta et khi ou le mélange d'au moins deux de ces alumines. Leur teneur massique par rapport à la masse de l'ensemble des oxydes inorganiques réfractaires entrant dans la composition de la phase active du catalyseur est comprise entre 50 et 100% et de préférence entre 80 et 100%.

Les éléments (A) du groupe des terres rares qui sont préférés par la demanderesse sont le lanthane, le néodyme, le praséodyme, le samarium et le gadolinium ou le mélange d'au moins deux de ces éléments. Néammoins, la demanderesse privilégie le lanthane.

Les éléments (B) appartenant aux groupes des métaux de transition VIB, VIIB, VIII, et IB du tableau périodique et sélectionnés par la demanderesse sont le cuivre, le nickel, le cobalt, le fer, le manganèse, le chrome et le molybdène, ou le mélange d'au moins deux de ces éléments. Cependant, la demanderesse privilégie le cuivre, le nickel, le cobalt et le manganèse ou le mélange d'au moins deux de ces métaux.

Parmi les métaux précieux (C) précités la demanderesse préfère mettre en oeuvre le platine. On peut également les utiliser en association avec le palladium, par exemple en une proportion allant jusqu'à 20% en poids, de préférence jusqu'à 15% en poids par rapport à l'ensemble des métaux précieux. Pour modifier plus fortement l'acidité du support, on peut éventuellement ajouter au moins un élément (D), appartenant au groupe IIA des alcalino-terreux. Parmi ceux-ci, la demanderesse privilégie le calcium, le baryum et le strontium ou le mélange d'au moins deux de ces éléments.

Cependant, pour que le catalyseur soit plus sélectif pour la réduction des oxydes d'azote en azote moléculaire, le rapport atomique entre d'une part, la somme des atomes de terres rares (A) et éventuellement des atomes des éléments (D) alcalino-terreux, et d'autre part, le nombre d'atomes de métaux de transition (B), est compris entre 0,1 et 10 et de préférence entre 0,5 et 5.

Les catalyseurs de l'invention, actifs en réduction sélective des oxydes d'azote en azote moléculaire, se présentent soit sous forme de billes, de pastilles ou d'extrudés, soit sous forme monolithique (phase active déposée sur un support céramique ou métallique). Dans le premier cas, les étapes unitaires de la préparation sont les suivantes:

a) - une étape de calcination sous air de l'oxyde inorganique réfractaire entre 500 et 1100°C de telle manière que la surface spécifique de cet oxyde soit comprise entre 10 et 150 $m^2/g$ et de préférence entre 20 et 100 $m^2/g$,

b) - une étape d'imprégnation de cet oxyde inorganique réfractaire par au moins une partie d'au moins un sel précurseur d'au moins un oxyde de terre rare (A),

c) - une étape de séchage puis calcination sous air, de l'oxyde inorganique imprégné par les précurseurs d'oxydes de terre rare (A), à une température comprise entre 700 et 1100°C de telle manière que soit créée en surface de l'oxyde inorganique réfractaire, une micro-couche superficielle d'aluminate de terre rare,

d) - une étape d'imprégnation de cet oxyde réfractaire modifié, par une solution renfermant la partie restante d'au moins un sel précurseur d'au moins un oxyde de terre rare (A), et au moins un sel précurseur d'au moins un élément du groupe des métaux de transition (B),

e) - une étape de séchage et calcination sous air de l'oxyde réfractaire modifié et imprégné par un précurseur de métal de transition, à une température comprise entre 650 et 900°C, par exemple de telle manière que la formation d'un oxyde composite de type pérovskite ne soit pas observé par diffraction des rayons X,

f) - une étape d'imprégnation sur le produit issu de l'étape de calcination (e) d'au moins un composé précurseur d'au moins un métal précieux (C),

g) - une dernière étape de séchage et de traitement thermique sous air, ou sous mélange neutre ou encore en milieu légèrement réducteur, de l'oxyde inorganique modifié et imprégné par le précurseur de métal précieux dans l'étape (e), à une température comprise entre 300 et 900°C et de préférence entre 500°C et 800°C, et

h) - l'ajout éventuel d'un élément alcalino-terreux (D) peut être réalisé, par imprégnation par au moins un précurseur d'au moins un élément appartenant au groupe IIB du tableau périodique en même temps, ou avant ou après les étapes d'imprégnation (b) et (d). Cependant, la demanderesse privilégie cet ajout lors de l'étape (d) d'imprégnation des précurseurs de métaux de transition (B).

Les durées des étapes de calcination et de traitement thermique (a), (c), (e) et (g), hors temps de séchage, sont comprises entre 1h et 50 heures et de préférence entre 1heure et 10heures.

Le traitement thermique de l'étape (g) peut être réalisé dans un four chauffé au gaz naturel ou le mélange carburant (gaz) - comburant (air) est réglé de telle manière que le milieu soit légèrement oxydant ou légèrement réducteur ou encore à la stoechiométrie (ou sous atmosphère de gaz inerte tel que l'azote si on utilise un four électrique).

Le conditionnement du catalyseur sous forme de billes, extrudés ou pastilles, peut être réalisé à n'importe quel stade de la préparation. Cependant la demanderesse préfère que l'étape de mise en forme soit réalisée directement sur l'oxyde inorganique réfractaire avant toute modification, ou encore après toutes les étapes d'imprégnation et de calcination.

Les éléments (A, B, C et D) sont ajoutés à l'oxyde inorganique réfractaire par imprégnation de solutions aqueuses ou organiques de précurseurs de métal ou d'oxyde de ces éléments, selon les techniques connues de l'homme de l'art, dites à sec ou avec excès.

Les précurseurs de terres rares (A) sont généralement les nitrates. Les teneurs massiques en ces éléments, exprimées en oxydes par rapport à la phase active, sont comprises entre 1 et 30% et de préférence entre 5 et 20% masse par rapport à la masse totale de la phase catalytique finale.

Les précurseurs de métaux de transition (B) sont choisis parmi les nitrates, les acétates et les formates, en solutions aqueuses, et les acétylacétonates, qui peuvent être mis en oeuvre en milieu organique. La teneur massique en métal de transition (B), exprimée par rapport à la masse de la phase active, est comprise entre 0,5 et 20% et d'une manière privilégiée entre 1 et 15% masse par rapport à la masse totale de la phase catalytique finale.

Les précurseurs des métaux précieux (C) sont ceux classiquement utilisés pour la préparation de catalyseurs, en particulier et quand ils existent, les chlorures, les homologues acides des chlorures, les complexes chlorés, les nitrates, les complexes aminés, les acétylacétonates. A titre d'exemples non limitatifs, on peut citer l'acide hexachloroplatinique, le chlorure de platine tétramine, le dinitroso-diamino platine, l'acide hexachloro-iridique, le trichlorure de ruthénium, le dichlorure de ruthénium pentamine.

La teneur massique en métal précieux (C) dans la phase active est comprise entre 0,05 et 5% et de préférence entre 0,1 et 3% masse par rapport à la masse totale de la phase catalytique finale.

Les nitrates, les formates et les acétates des éléments (D) du groupe IIA des alcalino-terreux sont généralement mis en oeuvre. La teneur massique en ces éléments (D), exprimée sous la forme d'oxyde dans la phase active, est comprise entre 0 et 15% et de préférence entre 0 et 10 % masse par rapport à la masse totale de la phase catalytique finale.

Cependant, pour l'utilisation sur véhicule, il est souvent préférable de mettre en oeuvre des supports rigides (monolithes) présentant une porosité ouverte importante (supérieure à 70%) afin de limiter les pertes de charge que pourraient engendrer les forts débits de gaz, et surtout les grandes vitesses spatiales des gaz d'échappement. En effet, ces pertes de charge pénalisent le bon fonctionnement du moteur et contribuent à abaisser le rendement d'un moteur à combustion interne (essence ou Diesel). Par ailleurs, la ligne d'échappement étant soumise à des vibrations ainsi qu'à des chocs mécaniques et thermiques importants, les catalyseurs en billes, en pastilles ou en extrudés risquent de subir des détériorations, soit par attrition, soit par fracturation.

Deux techniques sont réalisées pour préparer les catalyseurs de l'invention sur des supports (ou substrats) monolithique en céramique ou en métal.

La première consiste à déposer sur le support monolithique, par la technique d'enduction connue de l'homme de l'art, la phase catalytique préparée selon le mode opératoire décrit ci-dessus (étapes unitaires (a) à (h)).

La seconde technique, privilégiée par la demanderesse, consiste d'abord à déposer l'oxyde inorganique sur le support monolithique selon la technique d'enduction décrite ci-dessous puis, à enchaîner toutes les étapes unitaires (a) à (h) décrites ci-dessus, directement sur le substrat monolithique recouvert par l'oxyde réfractaire.

La technique d'enduction consiste à préparer une suspension aqueuse composée d'une charge poudre (l'oxyde inorganique réfractaire ou la phase catalytique préparée selon le processus ci-dessus) et d'un composé appelé liant, d'origine minérale (gel d'alumine, sol de silice, etc.) ou organique (gomme arabique, etc.) qui permet de fixer cet oxyde sur le support. L'opération de dépôt de cet oxyde est réalisée soit par immersion du monolithe dans la suspension, soit par circulation de la suspension dans le monolithe ou encore par pulvérisation de cette suspension sur le

monolithe. Après élimination de l'excédent de suspension, le film d'oxyde est fixé sur le support par séchage puis calcination de l'ensemble à une température généralement comprise entre 300 et 1100°C, de préférence entre 500 et 1100°C, ce qui correspond aux conditions de l'étape (a) décrite plus haut.

Les supports monolithes qui peuvent être mis en oeuvre sont:

- soit en céramique, dont les éléments principaux peuvent être l'alumine, la zircone, la cordiérite, la mullite, la silice, les alumino-silicates ou la combinaison de plusieurs de ces composés,
- soit en carbure et/ou nitrure de silicium,
- soit en titanate d'aluminium
- soit en métal; ils sont alors généralement obtenus à partir d'alliage de fer, chrome et aluminium dopés éventuellement par du nickel, du cobalt, du cérium ou de l'yttrium. Les plus connus ont comme appellation FECRALLOY® ou KANTHAL®.

Les supports céramiques ont une structure de type nid d'abeille ou se présentent sous forme de mousse ou de fibres.

Les supports métalliques peuvent être réalisés par l'enroulement de feuillards ondulés ou par l'empilement de feuilles métalliques également ondulées, constituant une structure en nid d'abeille à canaux droits ou à canaux en zig zag communiquant entre eux ou non. Ils peuvent être également réalisés à partir de fibres ou de fils métalliques enchevêtrés, tissés, tressés ou tricotés.

Pour les supports en métal renfermant de l'aluminium dans leur composition, il est recommandé de les prétraiter à haute température (par exemple entre 700 et 1100°C) pour développer en surface une micro-couche d'alumine réfractaire. Cette micro-couche superficielle, de porosité et de surface spécifique supérieure à celle du métal d'origine favorise l'accrochage de la phase active tout en protégeant le reste du support contre la corrosion.

La quantité de phase catalytique (ou phase active) déposée ou préparée directement sur le support (ou substrat) céramique ou métallique est généralement comprise entre 20 et 300g par litre dudit support et avantageusement entre 50 et 200g par litre.

Les exemples, 1 et 5 à 8 ci-après, illustrent l'invention sans en limiter la portée. Dans ces exemples, il est décrit uniquement la préparation directe des catalyseurs sur support monolithique. Cependant, ces phases peuvent être également préparées sous forme de billes, extrudés ou pastilles. Cette mise en forme (dragéification, extrusion ou pastillage) peut être réalisée à toutes les étapes de la préparation décrite ci-dessus. Il en est de même en ce qui concerne l'enduction de la phase active, partiellement ou totalement formée, sur un support monolithique.

Les exemples 2 à 4, décrivent la préparation de catalyseurs selon l'art antérieur.

A titre de comparaison, tous ces catalyseurs sont testés (exemples 9 et 10), soit au laboratoire en micro-unité avec un mélange de gaz synthétique, soit sur banc moteur avec un gaz d'échappement réel.

## EXEMPLES

Dans tous les exemples, la désignation de phase active (ou phase catalytique) déposée sur le support (ou substrat) correspond à la somme des éléments constituant le catalyseur décrit dans la procédure ci-dessus, à savoir : l'oxyde inorganique réfractaire, les oxydes de terre rare (A), les oxydes de métaux de transition (B) et éventuellement les oxydes des éléments alcalino-terreux (D), ainsi que les métaux précieux (C). La masse du substrat monolithique en céramique ou en métal n'est pas prise en compte dans l'expression des teneurs massiques de chacun des constituants de cette phase catalytique.

Selon les habitudes de l'homme de l'art les quantités de métal précieux présentes dans le catalyseur seront généralement exprimées en gramme par litre de support. Les teneurs massiques des différents éléments constituants la phase catalytique (ou phase active) sont mentionnées dans le tableau I.

### Exemple 1 (invention)

On disperse 250g d'alumine liante (boehmite) sous forme de poudre dans 2500cm$^3$ d'eau distillée renfermant l'équivalent de 18g d'acide nitrique. On introduit ensuite 850g d'alumine charge (alumine gamma) de surface spécifique 110m$^2$/g.

Cette suspension est broyée de telle manière que la granulométrie moyenne des particules solides soit inférieure à 10 microns.

Un monolithe céramique de 0,904 litre, vendu par la société Corning, et présentant une structure en nid d'abeille avec une densité de 62 cellules par cm$^2$ est enduit par cette suspension. Pour réaliser cette opération, le support est immergé dans le milieu pendant quelques secondes, secoué et soufflé pour éliminer l'excédent de produit qui obstrue les canaux. Le support, recouvert par le film de matière, est séché puis calciné à 600°C afin de fixer l'enduit

(ou "wash coat") au support.

Après une deuxième opération d'enduction et un traitement thermique sous air, à 900°C pendant 10 heures, la teneur en "wash coat" alumine est de 120g par litre de support et sa surface spécifique est de 85m$^2$/g.

Le monolithe enduit d'alumine est ensuite imprégné par une solution de nitrate de lanthane puis séché à 120°C pendant 2h et calciné à 1000°C pendant 6 heures. La teneur en lanthane exprimée en oxyde ($La_2O_3$) par rapport à la couche finale de la phase active est de 8% masse.

L'analyse par diffraction des rayons X d'un échantillon de "wash coat" prélevé par grattage du monolithe met en évidence la présence d'aluminate de lanthane.

Ce monolithe est ensuite imprégné par une solution aqueuse équimoléculaire en nitrate de lanthane et en nitrate de cobalt de telle manière que les teneurs massiques en oxyde de lanthane ($La_2O_3$) et en ($Co_2O_3$) par rapport à la couche finale de phase active soient respectivement de 19.5% et de 5.9% masse.

Après calcination à 900°C pendant 4h, la présence de la pérovskite $LaCoO_3$ n'est pas détectée lors d'une analyse par diffraction des rayons X d'un échantillon de wash coat.

Ce monolithe enduit est enfin imprégné par une solution aqueuse de dinitroso-diamino platine de telle manière que la teneur en platine dans le catalyseur finale soit de 1g par litre de substrat. Le traitement thermique final est réalisé sous air à 500°C pendant 2 heures.

**Exemple 2 (comparatif)**

On reproduit la préparation du catalyseur de l'exemple 1 à l'exception que les étapes d'imprégnation des solutions renfermant les nitrates de lanthane et de cobalt sont supprimées.

**Exemple 3 (comparatif)**

On reproduit la préparation du catalyseur de l'exemple 1 à l'exception que l'étape d'imprégnation de la solution mixte renfermant les nitrates de lanthane et de cobalt est remplacée par une seule imprégnation par une solution ne renfermant que du nitrate de lanthane.

**Exemple 4 (comparatif)**

On reproduit la préparation du catalyseur de l'exemple 1 à l'exception que les étapes d'imprégnation des solutions renfermant les nitrates de lanthane et de cobalt sont supprimées et remplacées par une seule imprégnation d'une solution de nitrate de cobalt.

**Exemple 5 (invention)**

On reproduit la préparation du catalyseur de l'exemple 1 aux exceptions que

- la première imprégnation est réalisée avec une solution renfermant du nitrate de lanthane et du nitrate de praséodyme de telle manière que la teneur en oxydes de terres rares après cette première opération soit toujours de 8% masse et que dans la couche finale la teneur en oxyde de praséodyme soit de 4% masse; et
- la deuxième étape d'imprégnation est réalisée en remplaçant 20% en masse du nitrate de cobalt par la même quantité de nitrate de cuivre.

Les autres opérations, calcination et imprégnation du précurseur de platine sont inchangées.

**Exemple 6 (invention)**

On reproduit la préparation de l'exemple 1 aux exceptions que :

- la quantité en oxyde de lanthane introduite à la première étape (b) d'imprégnation des terres rares correspond à une teneur de 9.5% poids d'oxyde de lanthane par rapport à la teneur en oxyde réfractaire,
- la température de calcination (étape c) après l'étape d'imprégnation de la terre rare est 1050°C, et la durée du traitement thermique est de 8 heures,
- la deuxième étape d'imprégnation (d) est réalisée à partir d'une solution nitrique renfermant un mélange de terres rares (lanthane et néodyme) et de métaux de transition (cobalt et nickel) de telle manière que les rapports massiques, dans les catalyseurs finaux, $La_2O_3/Nd_2O_3$ et $Co_2O_3/NiO$ soient respectivement de 5 et 4, et que les teneurs massiques en oxydes de terres rares et en oxydes de métaux de transition soient respectivement de 18.5% et

3.5% poids.

- l'imprégnation de la solution de platine à l'étape (f) est remplacée par l'imprégnation d'une solution chlorhydrique renfermant du platine et du palladium dans un rapport atomique Pt/Pd égal à 5.

Les conditions opératoires des autres étapes sont inchangées.

**Exemple 7 (invention)**

Sur un monolithe métallique de type empilé, à canaux zig zag, de la société ROSI, on enduit une suspension d'alumine identique à celle de l'exemple 1 mais renfermant en plus une zéolite de type ZSM5 au rapport Si/Al de 25 avec, pour cette suspension, un rapport massique alumine/zéolite de 5 et en remplaçant le liant alumine par un sol de silice.

Après enduction, et calcination du monolithe à 800°C, on imprégne une solution mixte de nitrate de lanthane et de nitrate de samarium avec un rapport atomique La/Sm de 2 et une teneur en oxyde de terre rare de 6% en masse par rapport à la somme alumine plus oxydes de terres rares.

Après calcination à 850°C pendant 4 heures, le monolithe est de nouveau imprégné par une solution mixte renfermant du nitrate de lanthane, du nitrate de cobalt et du nitrate de strontium dans un rapport atomique Co/Sr=2,5 et Co/La=1,67 L'étape de calcination est réalisée à 900°C pendant 2 heures.

L'ajout du métal précieux est réalisé comme décrit dans l'exemple 1.

**Exemple 8 (invention)**

Sur un monolithe métallique à structure fibrillaire à circulation radiale des gaz, on enduit une suspension d'alumine identique à celle de l'exemple 1.

Sur ce monolithe calciné à 700°C, on imprègne une soludon de nitrate de lanthane de telle manière que la teneur en oxyde de lanthane soit de 4% en masse par rapport à la phase active finale. Une nouvelle étape de calcination sous air est réalisée à 750°C pendant 10heures.

On imprègne ensuite une solution nitrique mixte de lanthane, de cobalt et de manganèse de telle manière que les rapports atomiques La/Co et La/Mn soient respectivement égaux à 1,6 et 2,86. La teneur en oxyde de lanthane dans la phase catalytique finale est de 18% masse .

Après calcination à 950°C pendant 6h, le monolithe enduit est imprégné par une solution mixte de nitrate de rhodium et de dinitroso-diamino platine au rapport atomique Pt/Rh = 10, avec une teneur en métaux précieux de 2g par litre de substrat.

Pour chacun des catalyseurs décrit ci-dessus, la masse et la composition massique de la phase active déposée sur le support céramique ou métallique (oxydes inorganiques réfractaires, oxydes de terres rares (A), éléments appartenant au groupe des métaux de transition (B), métaux précieux (C) et éventuellement des métaux alcalino-terreux (D)) sont rassemblées dans le tableau I.

**Tableau I**

**Composition massique de la phase active du catalyseur (oxydes + métaux - hors support)**
**(teneur par litre de substrat et pourcentage massique dans la phase catalytique)**

| catalyseur de l'exemple | oxyde inorganique | oxyde terre rare | | | | oxyde alcalino terreux | oxydes métaux de transition | | | | métaux précieux | | |
|---|---|---|---|---|---|---|---|---|---|---|---|---|---|
| | | $La_2O_3$ | $Sm_2O_3$ | $Nd_2O_3$ | $Pr_6O_{11}$ | SrO | $Co_2O_3$ | CuO | $Mn_2O_3$ | NiO | Pt | Rh | Pd |
| 1 (inv.)<br>(162,20g/l) | 73,983<br>(120g) | 19,5<br>(31,63) | | | | | 5,9<br>(9,57) | | | | 0,616<br>(1,0) | | |
| 2 (comp.)<br>(121,0g/l) | 99,173<br>120 | | | | | | | | | | 0,827<br>(1,0) | | |
| 3 (comp.)<br>(150,31g/l) | 79,835<br>(120) | 19,5<br>29,31 | | | | | | | | | 0,665<br>1,0 | | |
| 4 (comp.)<br>(128,59g/l) | 93,322<br>120 | | | | | | 5,9<br>7,59 | | | | 0,778<br>(1,0) | | |
| 5 (inv.)<br>(162,20g/l) | 73,983<br>(120) | 15,5<br>(25,14) | | | 4,0<br>(4,81) | | 4,72<br>(7,66) | 1,18<br>(1,91) | | | 0,616<br>(1,0) | | |
| 6 (inv.)<br>(155,27g/l) | 77,284<br>(120) | 15,5<br>(24,07) | | 4,0<br>(6,49) | | | 2,8<br>(4,355) | | | 0,7<br>(1,09 | 0,556<br>0,863 | | 0,060<br>(0,093 |
| 7 (inv.)<br>(161,28g/l) | 77,284<br>(120) | 9,89<br>(15,95) | 2,0<br>(3,23) | | | 4.34<br>7,0 | 8,742<br>(14,1) | | | | 0,620<br>(1,0) | | |
| 8 (inv.)<br>(136,15g/l) | 77,12<br>(105) | 18,0<br>(24,51) | | | | | 2,228<br>(3,03) | | 1,185<br>(1,61) | | 1,394<br>(1,898 | 0.075<br>(0,102 | |

**Exemple 9**

Les catalyseurs préparés sur supports céramiques sont testés au laboratoire dans une micro-unité avec un mélange de gaz synthétique renfermant les principales familles de composés présents dans un gaz d'échappement d'un moteur Diesel. Les conditions opératoires sont les suivantes:

| | |
|---|---|
| **vitesse spatiale** (VVH) | 10 000$h^{-1}$ |
| **composition du mélange** | |
| $NO_x$ | 600ppm |
| Hydrocarbures | 6000ppmC (équivalent méthane) |
| $O_2$ | 5% |
| $CO_2$ | 10% |
| CO | 500ppm |
| $H_2O$ | 10% |
| $SO_2$ | 20ppm |
| $N_2$ | complément à 100% |
| **température** | montée de 150 à 500°C (5°C/ min.) |

L'analyse des principaux composants est réalisée en continu à la sortie du réacteur par des analyseurs à détection infra-rouge pour le monoxyde de carbone (CO) et le protoxyde d'azote ($N_2O$), par ionisation de flamme pour les hydrocarbures (HC) et par chimiluminescence pour les oxydes d'azote (NO et $NO_2$).

Ces résultats d'analyse permettent de déterminer les évolutions de la conversion des oxydes d'azote, de la sélectivité en protoxyde d'azote et du rendement azote en fonction de l'évolution de la température de réaction.

Les formules de calcul pour ces trois paramètres (exprimé en %) sont les suivantes:

**Conversion $NO_x$ ; C = 100 x ($NO_x$ entrée - $NO_x$ sortie) /$NO_x$ entrée**

**Sélectivité $N_2O$ : S = 100 x (2xN2O formé) / $NO_x$ disparu**

**Rendement $N_2$ : R = C x (100-S) / 100**

Dans le tableau II ci-dessous sont rassemblés les valeurs des températures et des trois paramètres ci-dessus calculés pour les conditions de tests correspondant aux plus faibles émissions en $NO_x$ à la sortie du catalyseur (conversion les plus fortes).

Tableau II

| **Tests catalytiques en micro - unité** | | | | | |
|---|---|---|---|---|---|
| Catalyseur de l'exemple | Composition | Conversion $NO_x$ max. | Sélectivité N20 | Rendement $N_2$ | Température Conversion max. |
| | | (%) | (%) | (%) | (°C) |
| 1 (inv.) | $Al_2O_3$ La - Co Pt | 85 | 21 | 67.1 | 280 |
| 2 (comp.) | $Al_2O_3$ | 66 | 50 | 33 | 271 |

Tableau II (suite)

| Tests catalytiques en micro - unité | | | | | |
|---|---|---|---|---|---|
| Catalyseur de l'exemple | Composition | Conversion $NO_x$ max. | Sélectivité N20 | Rendement $N_2$ | Température Conversion max. |
| | | (%) | (%) | (%) | (°C) |
| | Pt | | | | |
| 3 (comp.) | $Al_2O_3$ La Pt | 55 | 45 | 30.2 | 285 |
| 4 (comp.) | $Al_2O_3$ Co Pt | 67 | 45 | 36,8 | 270 |
| 5 (inv.) | $Al_2O_3$ La - Pr - Co - Cu Pt | 88 | 31 | 60.7 | 263 |
| 6 (inv.) | $Al_2O_3$ La - Nd- Co - Ni Pt - Pd | 76 | 34 | 50,2 | 285 |

On constate que les températures les plus basses pour atteindre ces maxima ne sont pas toujours en faveur des catalyseurs de l'invention. Cependant, l'objectif de l'élimination des oxydes d'azote dans un gaz d'échappement est de les réduire en azote moléculaire ($N_2$) inerte, et non pas de les transformer en protoxyde d'azote ($N_2O$) qui est un sous produit polluant non désiré.

Par conséquent, les catalyseurs de l'invention sont donc les plus performants pour la réaction de réduction de tous les composés oxygénés de l'azote en azote moléculaire.

**Exemple 10**

Les catalyseurs préparés sur supports métalliques ont été testés sur banc moteur équipés d'un moteur Diesel de cylindrée moyenne (1,9 litres). Le régime moteur du véhicule est maintenu constant (2300t/mn). Pour que la température des gaz d'échappement devienne plus élevée, la charge du moteur est progressivement augmentée par l'intermédiaire d'un frein hydraulique.

Dans ces conditions, les émissions d'oxydes d'azote et d'hydrocarbures imbrûlés ou partiellement oxydés varient peu : les teneurs sont respectivement de 200 à 300ppm en $NO_x$ et 50 à 150ppmC (équivalent méthane).

Pour qu'une partie significative des oxydes d'azote puisse être éliminée par réduction catalytique, on injecte en amont du catalyseur un appoint de gazole de telle manière que sa concentration dans le gaz d'échappement avant catalyse soit équivalente à 3000ppmC (équivalent méthane). La vitesse spatiale des réactifs sur le catalyseur est maintenue pratiquement constante et égale à 30 000$h^{-1}$ et la température du gaz en entrée du catalyseur varie entre 250 et 500°C.

Le tableau III résume les performances obtenues avec ces catalyseurs, en particulier les taux de conversion maximum des oxydes d'azote et les températures pour lesquelles ils ont été obtenus.

Tableau III

| **Tests catalytiques sur Moteur Diesel** (banc moteur) | | | | |
|---|---|---|---|---|
| Catalyseur de l'exemple | Composition | Support | Conversion $NO_x$ max. | Température Conversion Max. |
| | | | (%) | (°C) |
| 1 | $Al_2O_3$ La - Co | céramique | 52 | 254 |

Tableau III (suite)

| **Tests catalytiques sur Moteur Diesel** (banc moteur) | | | | |
|---|---|---|---|---|
| Catalyseur de l'exemple | Composition | Support | Conversion $NO_x$ max. | Température Conversion Max. |
| | | | (%) | (°C) |
| | Pt | | | |
| 3 (comp.) | $Al_2O_3$<br>La<br>Pt | céramique | 32 | 265 |
| 7 | $Al_2O_3$ - ZSM5<br>SiO2<br>La - Sm - Sr -Co<br>Pt | métallique<br>empilé | 47 | 242 |
| 8 | $Al_2O_3$<br>La - Co - Mn<br>Pt - Rh | métallique<br>fibres | 45 | 265 |

On constate que les taux de conversion des oxydes d'azote dans les gaz d'échappement de moteur Diesel sur les catalyseurs de l'invention et dans les conditions opératoires définies ci-dessus sont supérieurs à 45% pour des températures comprises entre 240 et 265°C. Dans les mêmes conditions, un catalyseur de l'art antérieur ne convertit qu'une trentaine de pourcent des $NO_x$ à une température comparable.

**Revendications**

1. Catalyseur pour la réduction des oxydes d'azote en azote moléculaire dans un milieu surstoechiométrique en composés oxydants, comprenant, exprimé en pourcent masse par rapport au produit calciné à 1000 °C pendant 4 heures :

   - de 30 à 98,45 % d'au moins un oxyde inorganique réfractaire constitué au moins en partie d'alumine ; la surface de l'alumine étant modifiée par ajout d'au moins un élément (A) appartenant au groupe des terres rares pour former une micro-couche d'aluminate de terre rare avec une partie de l'alumine ;

   sur lequel sont dispersés :

   - au moins un élément (A) appartenant au groupe des terres rares ;
   - de 0,5 à 20 % d'au moins un élément (B) appartenant aux groupes VIB, VIIB, VIII et IB des métaux de transition, exprimé sous forme d'oxyde ;
   - et de 0 à 15 % d'au moins un élément (D) appartenant au groupe IIA des alcalino-terreux, exprimé sous forme d'oxyde ;

   sur lesquels est dispersé :

   - de 0,05 à 5 % d'au moins un élément (C) appartenant au groupe des métaux précieux comprenant le platine, le rhodium, le ruthénium, l'iridium et l'osmium ; et
   - la teneur massique totale en les éléments appartenant au groupe des terres rares (A) étant comprise entre 1 et 30 %, exprimé sous forme d'oxyde ;
   - ledit oxyde inorganique réfractaire comprenant au moins 50 % d'alumine ;
   - le rapport atomique entre d'une part, la somme des atomes de (A) et, le cas échéant, de (D) et d'autre part, le nombre d'atomes de (B) étant compris entre 0,1 et 10 ; et
   - ledit catalyseur ne contenant pas d'oxyde composite de type pérovskite détectable par diffraction des rayons X.

2. Catalyseur selon la revendication 1, **caractérisé en ce que**

- ledit oxyde inorganique réfractaire représente de 52 à 93,9 % de sa masse;
- ledit d'au moins élément (B), exprimé sous forme d'oxyde, représente de 1 à 15 % en masse ;
- ledit élément (D), exprimé sous forme d'oxyde, représente de 0 à 10 % en masse ;
- ledit élément (C) représente de 0,1 à 3 % en masse ;
- la teneur massique totale en les éléments appartenant au groupe des terres rares (A) est de 5 à 20 %, exprimé sous forme d'oxyde ; et
- ledit oxyde inorganique réfractaire comprend au moins 80 % d'alumine.

**3.** Catalyseur selon la revendication 1 ou 2, **caractérisé en ce que** l'oxyde inorganique réfractaire est de l'alumine, de la silice, de la silice-alumine, une zéolite, de l'oxyde de titane, de l'oxyde de zirconium, un oxyde mixte ou une solution solide d'au moins deux des oxydes précités, ou le mélange d'au moins deux de ces composés.

**4.** Catalyseur selon la revendication 3, **caractérisé en ce que** l'oxyde inorganique réfractaire est l'alumine bêta, delta, gamma, thêta ou khi ou le mélange d'au moins deux de ces alumines.

**5.** Catalyseur selon l'une des revendications 1 à 4, **caractérisé en ce que** l'élément (A) appartenant au groupe des terres rares est le lanthane, le néodyme, le praséodyme, le samarium, le gadolinium ou le mélange d'au moins deux de ces éléments.

**6.** Catalyseur selon la revendication 5, **caractérisé en ce que** l'élément (A) appartenant au groupe des terres rares est le lanthane.

**7.** Catalyseur selon l'une des revendications 1 à 6, **caractérisé en ce que** l'élément (B) appartenant aux groupes des métaux de transition VIB, VIIB, VIII et IB est le cuivre, le nickel, le cobalt, le fer, le manganèse, le chrome ou le molybdène ou le mélange d'au moins deux de ces éléments.

**8.** Catalyseur selon la revendication 7, **caractérisé en ce que** l'élément (B) appartenant aux groupes des métaux de transition est le cuivre, le nickel, le cobalt ou le manganèse ou le mélange d'au moins deux de ces métaux.

**9.** Catalyseur selon les revendications 1 à 8, **caractérisé en ce que** l'élément (C) appartenant au groupe des métaux précieux est le platine.

**10.** Catalyseur selon l'un des revendications 1 à 9, **caractérisé en ce que** l'élément (C) appartenant au groupe des métaux précieux est mis en oeuvre en association avec une proportion de palladium allant jusqu'à 20% en poids par rapport à l'ensemble des métaux précieux.

**11.** Catalyseur selon l'une des revendications 1 à 10, **caractérisé en ce que** l'élément (D) du groupe IIA des alcalino-terreux est le magnésium, le calcium, le baryum ou le strontium ou le mélange d'au moins deux de ces éléments.

**12.** Catalyseur selon l'une des revendications 1 à 11, **caractérisé en ce que** le rapport atomique entre d'une part, la somme des atomes de terres rares (A) et des atomes des éléments alcalino-terreux (D), et d'autre part, le nombre d'atomes de métaux de transition (B), est compris entre 0,5 et 5.

**13.** Catalyseur selon l'une des revendications 1 à 12, **caractérisé en ce que** la phase catalytique se présente sous forme de billes, d'extrudés ou de pastilles.

**14.** Catalyseur selon l'une des revendications 1 à 12, **caractérisé en ce que** la phase catalytique est supportée par un substrat monolithique.

**15.** Catalyseur selon la revendication 14, **caractérisé en ce que** ledit substrat monolithique est en céramique ou en métal.

**16.** Catalyseur selon la revendication 15, **caractérisé en ce que** le substrat est métallique et a une structure enroulée ou empilée à canaux droits ou en zigzag, ou une structure fibrillaire.

**17.** Catalyseur selon l'une des revendications 14 à 16, **caractérisé en ce que** la masse de la phase catalytique déposée ou préparée sur le substrat monolithique est comprise entre 20 et 300 g par litre de substrat.

**18.** Catalyseur selon la revendication 17 **caractérisé en ce que** la masse de ladite phase catalytique est comprise entre 50 et 200 g par litre de substrat.

**19.** Utilisation d'un catalyseur selon l'une des revendications 1 à 18, dans l'élimination, par réduction, des oxydes d'azote dans un gaz d'échappement surstoechiométrique en composés oxydants provenant d'un moteur ou d'une turbine.

**20.** Utilisation selon la revendication 19 dans laquelle le gaz d'échappement est surstoechiométrique en oxygène.

**21.** Utilisation selon la revendication 19 ou 20, dans l'élimination des oxydes d'azote émis par les moteurs stationnaires, les véhicules à moteur Diesel, les véhicules à essence à réglage pauvre et par les turbines fonctionnant au gaz naturel (GNC) ou liquéfié (GPL) ou encore avec un carburant liquide.

**22.** Utilisation selon l'une des revendications 19 à 21, **caractérisée en ce que** les composés réducteurs mis en oeuvre pour réaliser la réduction des oxydes d'azote sont choisis parmi le monoxyde de carbone, l'hydrogène, les hydrocarbures, les alcools, les éthers ou d'autres produits organiques oxygénés, et également les carburants consommés par le moteur ou la turbine.

## Claims

**1.** A catalyst for reducing oxides of nitrogen to molecular nitrogen in a medium that is superstoichiometric in oxidizing compounds comprising, expressed as the percentage with respect to the product calcined at 1000°C for 4 hours:

- 30% to 98.45% of at least one refractory inorganic oxide at least partially constituted by alumina; the surface of the alumina being modified by adding at least one element (A) from the rare earth group to form a microlayer of rare earth aluminate with a portion of the alumina;

on which are dispersed:

- at least one element (A) from the rare earth group;
- 0.5% to 20% of at least one element (B) from transition metal groups VIB, VIIB, VIII and IB, expressed as the oxide; and
- 0 to 15% of at least one element (D) from the alkaline-earth group IIA, expressed as the oxide;

on which are dispersed:

- 0.05% to 5% of at least one element (C) from the precious metal group comprising platinum, rhodium, ruthenium, iridium and osmium; and
- the total mass content of rare earth group elements (A) being in the range 1% to 30%, expressed as the oxide;
- said refractory inorganic oxide comprising at least 50% alumina;
- the atomic ratio of the sum of the atoms of (A) and, if appropriate, of (D) over the number of atoms of (B) being in the range 0.1 to 10; and
- said catalyst containing no composite perovskite type oxide composite detectable by X ray diffraction.

**2.** A catalyst according to claim 1, **characterized in that**:

- said inorganic refractory oxide represents 52% to 93.9% of its mass;
- said at least one element (B), expressed in the oxide form, represents 1% to 15% by weight;
- said element (D), expressed in the oxide form, represents 0 to 10% by weight;
- said element (C) represents 0.1% to 3% by weight;
- the total mass content of elements from the rare earth group (A) is 5% to 20%, expressed in the oxide form; and
- said refractory inorganic oxide comprises at least 80% alumina.

**3.** A catalyst according to claim 1 or claim 2, **characterized in that** the inorganic refractory oxide is alumina, silica, silica-alumina, a zeolite, titanium oxide, zirconium oxide, a mixed oxide or a solid solution of at least two of said oxides, or a mixture of at least two of said compounds.

**4.** A catalyst according to claim 3, **characterized in that** the inorganic refractory oxide is beta, delta, gamma, theta or khi alumina or a mixture of at least two of said aluminas.

**5.** A catalyst according to one of claims 1 to 4, **characterized in that** the rare earth group element (A) is lanthanum, neodymium, praseodymium, samarium, gadolinium or a mixture of at least two of said elements.

**6.** A catalyst according to claim 5, **characterized in that** the rare earth group element (A) is lanthanum.

**7.** A catalyst according to one of claims 1 to 6, **characterized in that** the element (B) from transition metal groups VIB, VIIB, VIII and IB is copper, nickel, cobalt, iron, manganese, chromium or molybdenum or a mixture of at least two of said elements.

**8.** A catalyst according to claim 7, **characterized in that** the transition metal group element (B) is copper, nickel, cobalt or manganese or a mixture of at least two of said metals.

**9.** A catalyst according to claims 1 to 8, **characterized in that** the precious metal group element (C) is platinum.

**10.** A catalyst according to one of claims 1 to 9, **characterized in that** the precious metal group element (C) is employed in association with a proportion of palladium of up to 20% by weight with respect to the total amount of precious metals.

**11.** A catalyst according to one of claims 1 to 10, **characterized in that** the alkaline-earth group IIA element (D) is magnesium, calcium, barium or strontium or a mixture of at least two of said elements.

**12.** A catalyst according to one of claims 1 to 11, **characterized in that** the atomic ratio between the sum of the rare earth atoms (A) and the alkaline-earth element atoms (D) and the number of transition metal atoms (B) is in the range 0.5 to 5.

**13.** A catalyst according to one of claims 1 to 12, **characterized in that** the catalytic phase is in the form of beads, extrudates or pellets.

**14.** A catalyst according to one of claims 1 to 12, **characterized in that** the catalytic phase is supported by a monolithic substrate.

**15.** A catalyst according to claim 14, **characterized in that** said monolithic substrate is formed from a ceramic or metal.

**16.** A catalyst according to claim 15, **characterized in that** the substrate is metallic and has a wound or laminated structure with straight or zigzagged channels, or has a fibrous structure.

**17.** A catalyst according to one of claims 14 to 16, **characterized in that** the mass of the catalytic phase deposited or prepared on the monolithic substrate is in the range 20 to 300 g per litre of substrate.

**18.** A catalyst according to claim 17, **characterized in that** the mass of said catalytic phase is in the range 50 to 200 g per litre of substrate.

**19.** Use of a catalyst according to one of claims 1 to 18, in eliminating, by reduction, oxides of nitrogen from an exhaust gas that is superstoichiometric in oxidizing compounds from an engine or a turbine.

**20.** Use according to claim 19, in which the exhaust gas is superstoichiometric in oxygen.

**21.** Use according to claim 19 or claim 20, in eliminating oxides of nitrogen from stationary engines, diesel engine vehicles, lean burn engine vehicles and by turbines driven by natural gas (CNG) or liquefied petroleum gas (LPG) or with a liquid fuel.

**22.** Use according to one of claims 19 to 21, **characterized in that** the reducing compounds employed to reduce the oxides of nitrogen are selected from carbon monoxide, hydrogen, hydrocarbons, alcohols, ethers or other organic oxygen-containing products, and also from fuels consumed by the engine or turbine.

## Patentansprüche

1. Katalysator zur Reduktion der Stickoxyde zu molekularem Stickstoff in einem an oxydierenden Verbindungen überstöchiometrischen Milieu, umfassend ausgedrückt in Masseprozent im Verhältnis zum, bei 1000°C für vier Stunden calziniertem, Produkt:

   - 30 - 98,45% wenigstens eines feuerfesten anorganischen Oxyds, wenigstens teilweise bestehend aus Aluminiumoxyd; wobei die Aluminiumoxyd-Oberfläche durch Zugabe wenigstens eines Elements (A) modifiziert ist, das zur Gruppe der Seltenerden gehört, um eine Seltenerdaluminatmikrolage mit einem Teil des Aluminiumoxyds zu bilden;

   auf welchem abgeschieden werden:

   - wenigstens ein Element (A), das zur Gruppe der Seltenerden gehört;
   - 0,5-20% wenigstens eines Elements (B), das zu den Gruppen VIB, VIIB, VIIIB und IB der Übergangsmetalle gehört, ausgedrückt in Oxydform;
   - und 0 - 15% wenigstens eines Elements (D), das zur Gruppe IIA der Erdalkalimetalle gehört, ausgedrückt in Oxydform; auf denen dispergiert wird:
   - 0,05 - 5% wenigstens eines Elements (C), das zur Gruppe der Edelmetalle gehört, die Platin, Rhodium, Ruthenium, Iridium und Osmium umfasst; und
   - wobei der Gesamtmassengehalt an Elementen, die zur Gruppe der Seltenerden (A) gehören zwischen 1 und 30%, ausgedrückt in Oxydform, liegt;
   - das feuerfeste anorganische Oxyd wenigstens 50% Aluminiumoxyd umfasst;
   - das Atomverhältnis zwischen einerseits der Summe der Atome von (A) und falls nicht, von (D) und andererseits die Anzahl der Atome (B) zwischen 01, und 10 liegt; und
   - wobei der Katalysator kein zusammengesetztes Oxyd vom Perovskit-Typ, detektierbar durch Röntgenstrahlendiffraktion, enthält.

2. Katalysator nach Anspruch 1, **dadurch gekennzeichnet, dass**

   - das feuerfeste anorganische Oxyd 52 - 93,9% seiner Masse darstellt;
   - das wenigstens eine Element (B), ausgedrückt in Oxydform, 1 bis 15 Masseprozent darstellt;
   - das Element (D), ausgedrückt in Oxydform, 0 - 10 Masseprozent darstellt;
   - das Element (C) 0,1 - 3 Masseprozent darstellt;
   - der Gesamtmassegehalt an Elementen, die zur Gruppe der Seltenerden (A) gehören, 5 - 20%, ausgedrückt in Oxydform, ist; und
   - das feuerfeste anorganische Oxyd wenigstens 80% Aluminiumoxyd umfasst.

3. Katalysator nach Anspruch 1 oder 2, **dadurch gekennzeichnet, dass** das feuerfeste anorganische Oxyd Aluminiumoxyd, Siliciumoxyd, Silicium-Aluminiumoxyd. ein Zeolit-Titan-Oxyd, Zirconium-Oxyd, ein gemischtes Oxyd oder eine feste Lösung von wenigstens zwei vorgenannten Oxyden oder eine Mischung von wenigstens zwei dieser Verbindungen ist.

4. Katalysator nach Anspruch 3, **dadurch gekennzeichnet, dass** das feuerfeste anorganische Oxyd beta-, gamma-, theta- oder khi- Aluminiumoxyd oder das Gemisch von wenigstens zwei dieser Aluminiumoxyde ist.

5. Katalysator nach einem der Ansprüche 1 bis 4, **dadurch gekennzeichnet, dass** das Element (A), das zur Gruppe der Seltenerden gehört, Lanthan, Neodym, Praseodym, Samarium, Gadolinium oder das Gemisch von wenigstens zwei dieser Elemente ist.

6. Katalysator nach Anspruch 5, **dadurch gekennzeichnet, dass** das Element (A), das zur Gruppe der Seltenerden gehört, Lanthan ist.

7. Katalysator nach einem der Ansprüche 1 bis 6, **dadurch gekennzeichnet, dass** das Element (B), das zu den Gruppen der Übergangsmetalle VIB, VIIB, VIIIB und IB gehört, Kupfer, Nickel, Kobalt, Eisen, Mangan, Chrom oder Molybdän oder das Gemisch von wenigstens zwei dieser Elemente ist.

8. Katalysator nach Anspruch 7, **dadurch gekennzeichnet, dass** das Element (B), das zu den Gruppen der Übergangsmetalle gehört, Kupfer, Nickel, Kobalt, oder Mangan, oder das Gemisch von wenigstens zwei dieser Metalle ist.

**9.** Katalysator nach den Ansprüchen 1 bis 8, **dadurch gekennzeichnet, dass** das Element (C), das zur Gruppe der Edelmetalle gehört, Platin ist.

**10.** Katalysator nach einem der Ansprüche 1 bis 9, **dadurch gekennzeichnet, dass** das Element (C), das zur Gruppe der Edelmetalle gehört, in Verbindung mit einem Anteil von Palladium eingesetzt wird, der bis zu 20 Gewichtsprozent im Verhältnis zur Gesamtheit der Edelmetalle geht.

**11.** Katalysator nach einem der Ansprüche 1 bis 10, **dadurch gekennzeichnet, dass** das Element (D), das zur Gruppe IIA der Erdalkalimetalle gehört, Magnesium, Kalzium, Barium oder Strontium oder das Gemisch von wenigstens zwei dieser Elemente ist.

**12.** Katalysator nach einem der Ansprüche 1 bis 11, **dadurch gekennzeichnet, dass** das Atomverhältnis zwischen einerseits der Summe der Seltenerdatome (A) und den Atomen der Erdalkalielemente (D) und andererseits der Anzahl von Übergangsmetallatomen (B) zwischen 0,5 und 5 liegt.

**13.** Katalysator nach einem der Ansprüche 1 bis 12, **dadurch gekennzeichnet, dass** die katalytische Phase in Form von Kugeln, Extrudaten oder Pastillen vorliegt.

**14.** Katalysator nach einem der Ansprüche 1 bis 12, **dadurch gekennzeichnet, dass** die katalytische Phase durch ein monolithisches Substrat getragen ist.

**15.** Katalysator nach Anspruch 14, **dadurch gekennzeichnet, dass** das monolithische Substrat aus Keramik oder aus Metall ist.

**16.** Katalysator nach Anspruch 15, **dadurch gekennzeichnet, dass** das Substrat metallisch ist und eine gerollte oder gestapelte Struktur mit geraden Kanälen oder Zick-Zack-Kanälen oder eine Faserstruktur hat.

**17.** Katalysator nach einem der Ansprüche 14 - 16, **dadurch gekennzeichnet, dass** die Masse der auf dem monolithischen Substrat abgeschiedenen oder hergestellten katalytischen Phase zwischen 20 und 300 g pro Liter Substrat liegt.

**18.** Katalysator nach Anspruch 17, **dadurch gekennzeichnet, dass** die Masse der katalytischen Phase zwischen 50 und 200 g pro Liter Substrat liegt.

**19.** Verwendung eines Katalysators nach einem der Ansprüche 1 bis 18, bei der Entfernung der Stickoxyde durch Reduktion in einem an oxydierenden Verbindungen über-stöchiometrischen Auspuffgas, das von einem Motor oder einer Turbine kommt.

**20.** Verwendung nach Anspruch 19, bei der das Auspuffgas über-stöchiometrisch an Sauerstoff ist.

**21.** Verwendung nach Anspruch 19 oder 20, bei der Entfernung von Stickoxyden, die durch stationäre Motoren, Fahrzeuge mit Dieselmotor, Benzinfahrzeuge mit Magergemischregelung und durch mit Erdgas arbeitende (GNC) oder mit Flüssiggas arbeitende (GPL) oder auch mit einem Flüssigbrennstoff arbeitende Turbinen ausgestossen werden.

**22.** Verwendung nach einem der Ansprüche 19 - 21, **dadurch gekennzeichnet, dass** die reduzierenden Verbindungen, die zur Durchführung der Reduktion der Stickoxyde eingesetzt werden, unter Kohlenmonoxyd, Wasserstoff, Kohlenwasserstoffen, Alkoholen, Äthem oder anderen sauerstoffhaltigen organischen Produkten und auf Brennstoffen, die durch den Motor oder die Turbine verbraucht werden, gewählt sind.